**Europäisches Patentamt**

**European Patent Office**

**Office européen des brevets**

(19)

(11) Numéro de publication : **0 160 992**
**B1**

(12) # FASCICULE DE BREVET EUROPÉEN

(45) Date de publication du fascicule du brevet :
28.09.88

(51) Int. Cl.⁴ : **G 11 B 23/03**, G 11 B 23/00,
**G 11 B 17/03**

(21) Numéro de dépôt : 85105677.0

(22) Date de dépôt : 31.03.82

(60) Numéro de publication de la demande initiale en
application de l'article 76 CBE : **0082743**

(54) **Mémoire à disques incluant une cartouche pour disque(s) magnétique(s) amovible(s) et cartouche incluse dans cette mémoire.**

(30) Priorité : 23.12.81 FR 8124057

(43) Date de publication de la demande :
13.11.85 Bulletin 85/46

(45) Mention de la délivrance du brevet :
28.09.88 Bulletin 88/39

(84) Etats contractants désignés :
**DE GB IT NL SE**

(56) Documents cités :
**US-A- 3 851 840**
**US-A- 3 900 172**
**IBM TECHNICAL DISCLOSURE BULLETIN, vol. 6, no. 8, janvier 1964, page 107, Armonk, US; D.D. JOHNSON et al.: "Random access magnetic memory unit"**
**PATENTS ABSTRACTS OF JAPAN, vol. 2, no. 7, 18 janvier 1978, page 10160 E 77; & JP - A - 52 123 204**

(73) Titulaire : **BULL S.A.**
**121, avenue de Malakoff**
**F-75764 Paris Cedex 16 (FR)**

(72) Inventeur : **Langrenne, Albert**
**23 bis rue Edgard Quinet**
**F-93 La Courneuve (FR)**
Inventeur : **Droux, Jacques**
**8, passage Lepeu**
**F-75011 Paris (FR)**

(74) Mandataire : **Gouesmel, Daniel et al**
**BULL S.A. Industrial Property Department 25 avenue de la Grande-Armée GA-4X018**
**F-75016 Paris (FR)**

EP 0 160 992 B1

Jouve, 18, rue St-Denis, 75001 Paris, France

## Description

La présente invention concerne une mémoire à disques incluant une cartouche pour disque(s) magnétique(s) amovible(s) et la cartouche incluse dans cette mémoire.

Les mémoires à disques magnétiques sont de plus en plus fréquemment utilisées en raison de leur capacité de stockage et du temps relativement court mis par les têtes magnétiques d'écriture/lecture à accéder à une information contenue en un point quelconque des disques à partir du moment où elles ont reçu l'ordre d'accéder à cette information.

On sait que les disques magnétiques portent des informations sur des pistes d'enregistrement concentriques circulaires dont la largeur n'excède pas quelques dizaines de microns, et qui sont disposées sur leurs deux faces.

Pour permettre la lecture et l'écriture des informations, les têtes magnétiques sont disposées de chaque côté des disques à une distance de quelques dixièmes de microns de ceux-ci.

Les disques magnétiques sont entraînés par un moteur électrique à une vitesse de rotation constante. Dans la pratique courante, et plus particulièrement dans le cas de mémoires qui comportent un nombre limité de disques (un ou deux disques), ces mémoires ayant une relativement faible capacité de stockage (de l'ordre d'une dizaine à quelques dizaines de millions d'octets, l'octet étant composé de huit bits, un bit étant l'unité d'information binaire égale à un ou zéro, et toute matérialisation de ce chiffre, par exemple sous forme d'enregistrement magnétique), au moins l'un de ces disques est contenu dans une cartouche amovible. Une mémoire à disques ne contient généralement qu'une seule cartouche amovible qui est remplacée par une autre dès que les opérations de lecture et/ou écriture concernant le disque qu'elle contient sont terminées. On voit ainsi, qu'à une même mémoire à disques magnétiques, peut être associée une pluralité de cartouches amovibles contenant chacune un disque magnétique.

Dans le cas où la mémoire comporte deux disques magnétiques, l'un de ceux-ci est non amovible et reste en permanence à l'intérieur de la mémoire à disques, (l'autre étant contenu dans la cartouche amovible).

On connaît des cartouches pour disque magnétique amovible, dont la forme et les dimensions normalisées assurent l'interchangeabilité, et dont la manipulation, lors de leur mise en place dans la mémoire à disques, est extrêmement simple. Elles permettent de plus au disque de ne pas être contaminé par des poussières et particules quelconques lors des périodes de repos, c'est-à-dire les périodes se situant entre deux périodes de fonctionnement dans la mémoire à disques magnétiques. En fonctionnement, elles permettent de plus, une ventilation du disque permettant de maintenir celui-ci dans une parfaite propreté, ce qui accroît la fiabilité de lecture des informations contenues sur celui-ci.

Une telle cartouche pour disque magnétique amovible est décrite et revendiquée, par exemple, dans le brevet français n° 2 337 396 déposé par la Compagnie Honeywell Bull le 31 Décembre 1975 sous le titre « Conditionnement pour disque magnétique ».

Une telle cartouche comprend un disque magnétique amovible rigide de faible diamètre. Elle est relativement plate (sa hauteur est plus de 10 fois inférieure à sa longueur ou sa largeur) et peut être insérée dans un logement adéquat d'une mémoire à disques. Elle est pourvue d'ouvertures qui sont fermées pendant les périodes de repos de la cartouche et ouvertes lorsque la cartouche est insérée dans la mémoire à disques, de manière à permettre le passage des têtes magnétiques d'écriture/lecture et le déplacement de celles-ci par rapport aux différentes pistes d'enregistrement. Cette cartouche comprend des moyens permettant de coupler le moyeu du disque à des moyens d'entraînement en rotation (qui sont le plus souvent constitués d'un moteur électrique).

Cette cartouche est caractérisée en ce que ses parois opposées sont rigides mais élastiquement déformables et bombées vers l'extérieur à l'état libre.

Pour mettre en place la cartouche à l'intérieur de la mémoire à disques l'incluant, la mémoire à disques comprend un réceptacle de cartouches pouvant pivoter autour d'une charnière horizontale. Ce réceptacle a une largeur de très peu supérieure à celle de la cartouche et ses parois latérales sont formées de deux cornières à l'intérieur desquelles peut glisser cette cartouche.

Le réceptacle peut occuper deux positions stables différentes. Dans la première position, dite position de travail, il est horizontal. La cartouche est alors en place dans la mémoire à disques magnétiques et le moyeu du disque est couplé aux moyens d'entraînement en rotation de la mémoire à disques.

Dans la seconde position, dite position de repos, le réceptacle occupe une position inclinée par rapport à l'horizontal. On peut alors soit retirer la cartouche du réceptacle, soit insérer celle-ci dans celui-ci.

Le mouvement du réceptacle est commandé par une porte frontale avant du bâti de la mémoire à disques. Cette porte peut pivoter autour d'une charnière horizontale.

Lorsque la porte frontale est fermée, le réceptacle est en position horizontale et la cartouche est en place à l'intérieur de la mémoire à disques en position de travail. Lorsque l'on ouvre la porte frontale avant, celle-ci pivote autour de sa charnière entraînant du même coup le pivotement du réceptacle autour de sa propre charnière, ce qui amène ce dernier dans sa position de repos. On peut alors retirer la cartouche (ou l'insérer).

On voit que le retrait d'une cartouche s'effectue en deux temps :

1°) desaccouplement du moyeu du disque vis à vis des moyens d'entraînement en rotation et passage du réceptable de sa position horizontale à sa position inclinée,

2°) retrait de la cartouche du réceptacle.

On connaît également un second dispositif d'insertion et d'une mise en place d'une cartouche à l'intérieur d'un bâti de mémoire à disque. Celui-ci est décrit dans l'IBM Technical Disclosure Bulletin, volume 6, numéro 8 de janvier 1964. Dans ce dispositif, la cartouche contient un disque magnétique amovible. Elle est destinée à être insérée dans un logement d'une mémoire à disque magnétique et est constituée d'une enveloppe à l'intérieur de laquelle est placé le disque, cette enveloppe comprenant une paroi inférieure et une paroi supérieure. Elle comporte par ailleurs une ouverture permettant le passage de têtes de lecture/écriture des informations contenues sur le disque et un dispositif permettant d'obturer ces ouvertures lorsque la cartouche est au repos. La cartouche comprend un moyeu du disque qui comporte des moyens d'accouplement de celui-ci à des moyens d'entraînement en rotation appartenant à la mémoire à disque magnétique. Par ailleurs, la cartouche décrite dans le document IBM comprend sur sa paroi inférieure des rainures qui coopèrent avec des moyens de positionnement inclus dans le logement de la mémoire à disque magnétique.

Les moyens d'accouplement de ce dernier dispositif comprennent d'une part un plateau à friction solidaire du moyeu du disque et une bille de positionnement placée à l'extérieur de la partie inférieure de l'enveloppe centre de celle-ci. Cette bille de positionnement assure un alignement précis du plateau de friction de la cartouche avec un second plateau de friction appartenant aux moyens d'entraînement en rotation. Ce second plateau de friction comporte en son centre un trou conique à l'intérieur duquel vient se placer la bille de positionnement. Lorsque la cartouche est parfaitement centrée grâce à la bille de positionnement, les moyens de positionnement du logement sont insérés à l'intérieur des rainures circulaires de l'enveloppe de la cartouche. On peut ensuite actionner un électro-aimant solidaire des moyens d'entraînement en rotation lequel permet d'engager l'un contre l'autre le premier et le second plateau de friction, ce qui permet d'entraîner en rotation le disque.

De tels dispositifs d'insertion et de mise en place d'une cartouche à l'intérieur d'un bâti de mémoire à disques, sont certes efficaces et fiables. Toutefois, ils présentent l'inconvénient d'être assez compliqués et relativement coûteux.

La présente invention permet de remédier à ces inconvénients. La caractéristique principale est de munir la paroi inférieure de la cartouche d'une part, et les moyens d'accouplement du moyeu du disque d'autre part, d'une rainure. La rainure de la paroi inférieure et la rainure des moyens d'accouplement sont dans le prolongement l'une de l'autre, lorsque la cartouche est au repos à l'extérieur de la mémoire à disque. Le bâti de la mémoire à disques, et les moyens d'entraînement en rotation sont par ailleurs respectivement munis de moyens de positionnement venant se placer à l'intérieur respectivement de la rainure de la paroi inférieure, et de la rainure des moyens d'accouplement lorsque la cartouche est mise en place dans la mémoire à disques.

On réalise ainsi un dispositif de mise en place et d'insertion de la cartouche très simple permettant d'insérer la cartouche dans la mémoire à disques en une seule opération, l'insertion de la cartouche assurant simultanément la mise en place de celle-ci à l'intérieur de la mémoire à disques et l'accouplement du moyeu du disque avec les moyens d'entraînement en rotation.

Selon l'invention, la cartouche pour au moins un disque magnétique amovible destinée à être insérée dans un logement d'une mémoire à disque magnétique est constituée d'une enveloppe à l'intérieur de laquelle est placé le disque et comprenant une paroi inférieure et une paroi supérieure, munie d'une ouverture permettant le passage de têtes de lecture/écriture des informations contenus sur le disque, un dispositif permettant d'obturer ces ouvertures lorsque la cartouche est au repos, un moyeu du disque comportant des moyens d'accouplement de celui-ci à des moyens d'entraînement en rotation, des rainures coopérant avec des moyens de positionnement du logement, est caractérisée en ce que les moyens d'accouplement comprennent une première rainure, la paroi inférieure de l'enveloppe comprenant une seconde rainure et des moyens à ressort, les moyens à ressort étant en contact avec les moyens d'accouplement et les deux rainures étant dans le prolongement l'une de l'autre lors de l'insertion de la cartouche dans le logement, les moyens de positionnement du logement venant se placer à l'intérieur de la seconde rainure et les seconds moyens de positionnement des moyens d'entraînement venant s'engager dans la première rainure lors de cette même insertion, au moins l'un des moyens de positionnement du logement venant plaquer les moyens à ressort contre la paroi inférieure de l'enveloppe de manière à ce que ceux-ci libèrent le moyeu du disque permettant ainsi la rotation de celui-ci.

L'invention concerne également une mémoire à disque magnétique comprenant un logement destiné à recevoir la cartouche décrite ci-dessus, les premiers moyens de positionnement du logement comprenant deux tétons disposés à l'intérieur de la seconde rainure lors de l'insertion de la cartouche et les seconds moyens de positionnement des moyens d'entraînement en rotation comprenant un téton d'entraînement disposé à l'intérieur de la première rainure lors de l'insertion de la cartouche.

D'autres caractéristiques et avantages de l'invention apparaîtront dans la description suivante donnée à titre d'exemple non limitatif et en se référant aux dessins annexés.

Sur ces dessins :

— les figures 1, 2, 3 rappellent comment est constituée une mémoire à disques incluant une cartouche pour disque(s) magnétique(s) amovible(s) selon l'art antérieur et comment cette cartouche est insérée et mise en place à l'intérieur de la mémoire à disques ;

— les figures 4 à 8 représentent un premier exemple de réalisation d'une cartouche selon l'invention ;

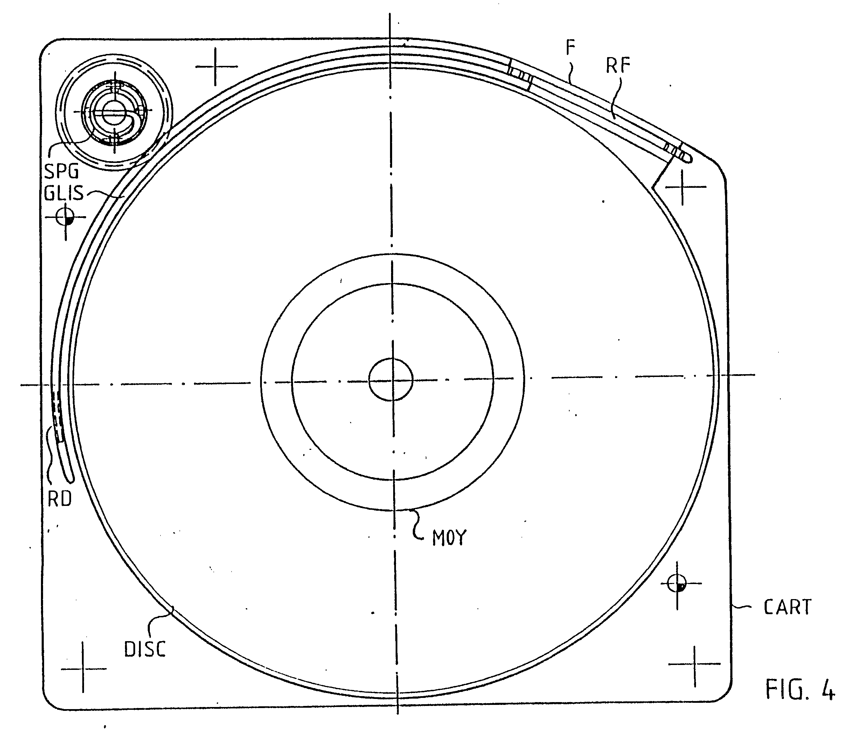

— la figure 4 étant une vue en coupe prise dans le plan du disque magnétique ;

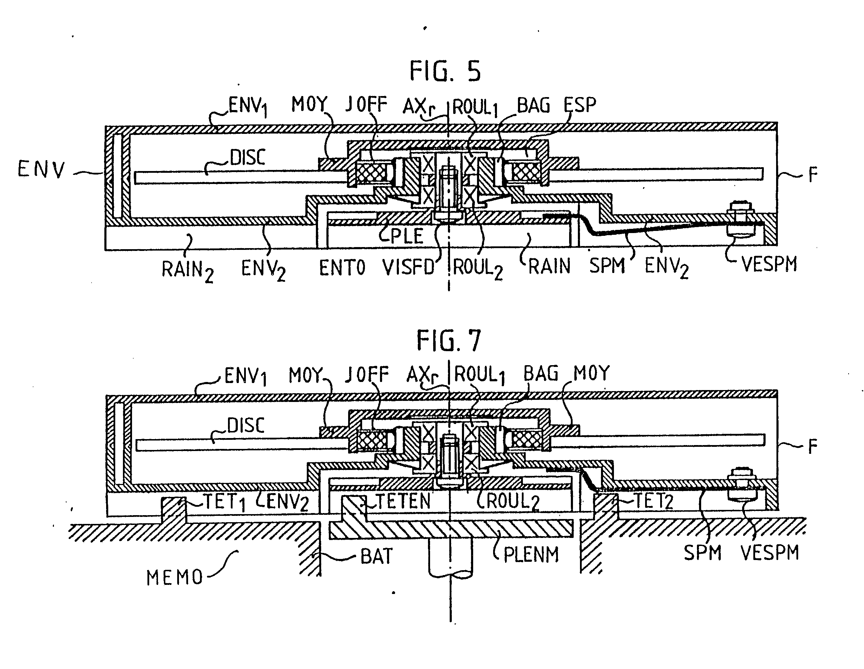

— la figure 5 étant une vue en coupe transversale prise dans un plan normal au disque magnétique montrant la cartouche dans la position qu'elle occupe lorsqu'elle est au repos ;

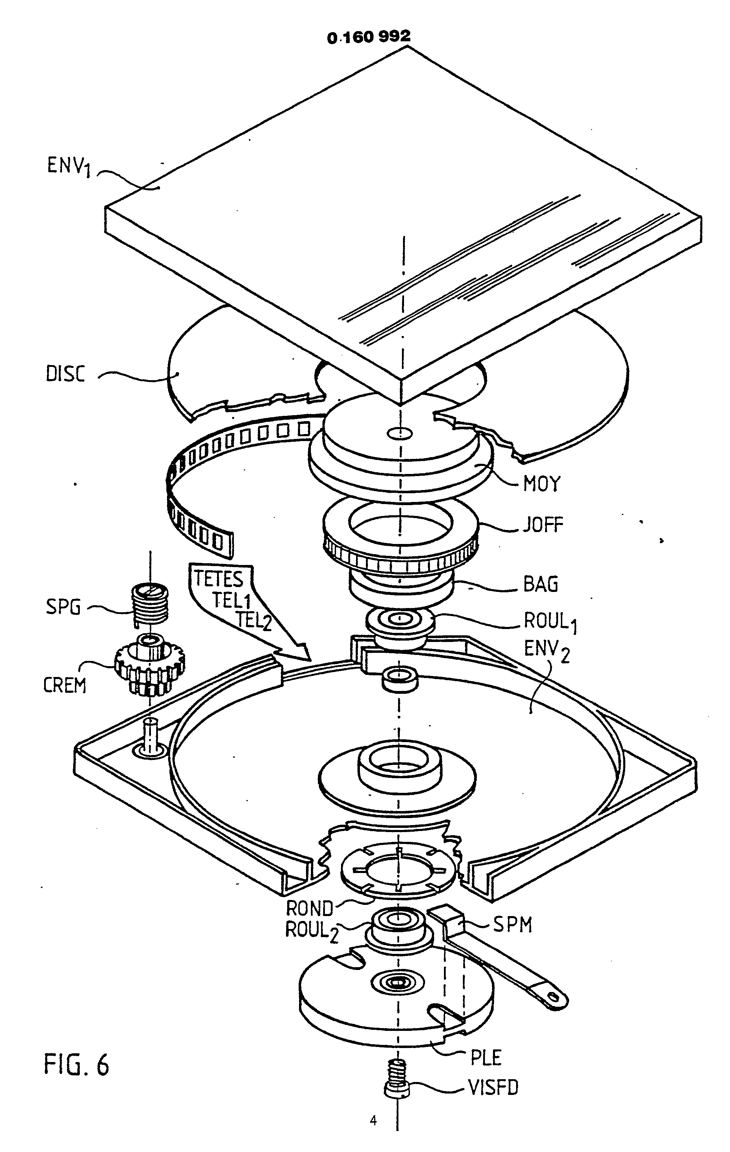

— la figure 6 étant une vue en perspective éclatée de la cartouche ;

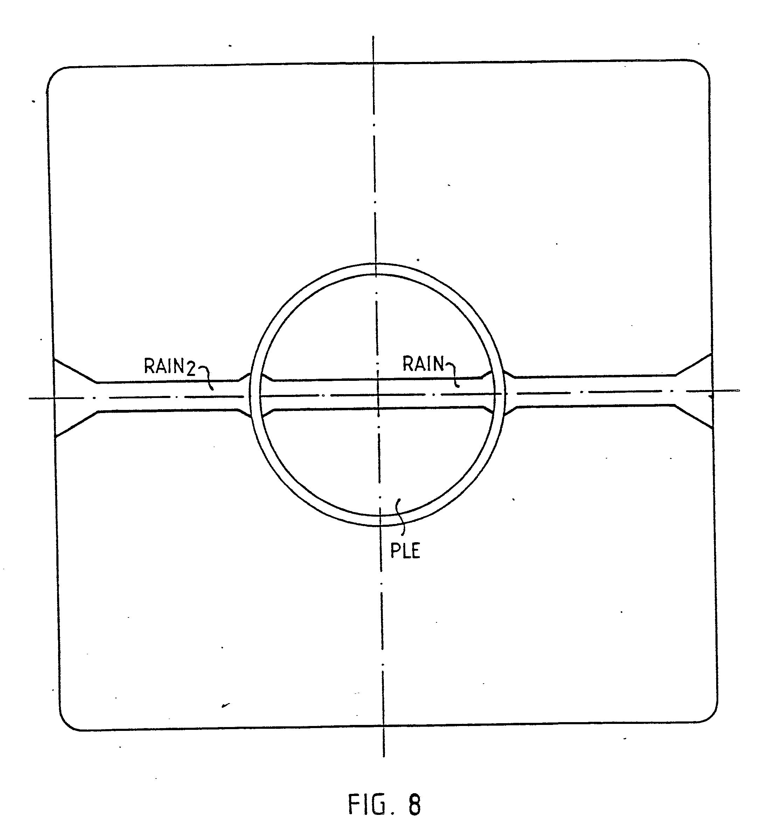

— la figure 7 étant une vue en coupe transversale prise dans un plan normal au disque magnétique montrant la cartouche dans la position qu'elle occupe lorsqu'elle est positionnée à l'intérieur de la mémoire à disques à laquelle elle est associée ;

— la figure 8 étant une vue de dessous de la cartouche selon l'invention ;

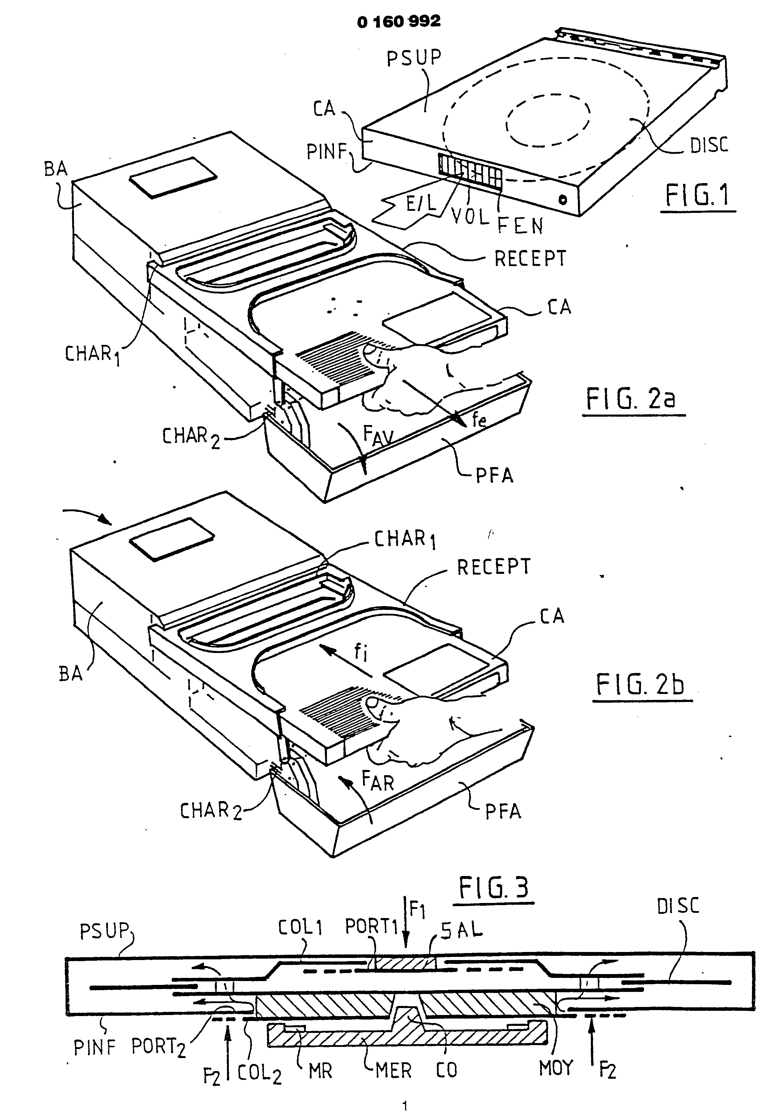

Afin de mieux comprendre comment est constituée et fonctionne la mémoire à disques selon l'invention ainsi que la cartouche incluse dans cette mémoire, il est utile de faire quelques rappels illustrés par les figures 1, 2, 3 sur la constitution et le fonctionnement des mémoires à disques et cartouches pour disque(s) magnétique(s) amovible(s) selon l'art antérieur.

Une telle cartouche, ainsi que la manière dont elle est insérée dans le bâti de la mémoire à disques est, par exemple décrite d'une part dans le brevet n° 2 337 396 précité et d'autre part dans les manuels de maintenance des mémoires à disques de type D-120 et D-140 fabriquées par la Société Cii Honeywell Bull.

La figure 1 montre la cartouche selon l'art antérieur CA qui se présente sous la forme d'un boîtier plat de contour carré dans lequel est enfermé le disque magnétique DISC. L'une des faces latérales de la cartouche comprend une fenêtre FEN qui est obturée par un volet VOL lorsque la cartouche est au repos, c'est-à-dire lorsqu'elle n'est pas insérée dans la mémoire à disques à laquelle elle est associée. Lors de l'introduction de la cartouche dans la mémoire à disques magnétiques, le volet VOL est manœuvré par un mécanisme intérieur inviolable, non visible à la figure 1, de manière à ce que la fenêtre FEN ne soit plus obturée.

Dès que le volet VOL est retiré, les têtes magnétiques d'écriture/lecture E/L symbolisées par une flèche à la figure 1, peuvent être introduites à l'intérieur de la cartouche pour y lire les données contenues sur les deux faces du disque magnétique DISC.

La cartouche CA est réalisée par un assemblage de plusieurs pièces en matériau rigide et élastiquement déformable et l'on a désigné par les références PSUP et PINF les grandes parois opposées de la cartouche, qu'on peut appeler, par abus de langage, paroi supérieure et paroi inférieure de la cartouche.

La figure 3 montre que la paroi supérieure PSUP comporte en son centre une saillie intérieure SAL terminée par une portée annulaire $PORT_1$ disposée en regard de la face interne de la paroi. Disposée de manière coaxiale à cette saillie, la paroi opposée PINF comporte une ouverture bordée sur sa face externe d'une portée annulaire $PORT_2$.

Par ailleurs, le disque DISC est monté sur un moyeu annulaire MOY dont les extrémités axiales et opposées portent respectivement un collet intérieur $COL_1$ en contact avec la portée $PORT_1$ et un collet extérieur $COL_2$ en contact avec la portée $PORT_2$ et ce, lorsque la cartouche est au repos. A ce sujet, on se référera particulièrement à la figure 3, où l'on a représenté en traits interrompus la position des collets $COL_1$ et $COL_2$ lorsque la cartouche est au repos.

Le bâti BA de la mémoire à disques, comprend un réceptacle RECEPT pouvant recevoir la cartouche CA. Ce réceptacle est de forme sensiblement rectangulaire et comporte sur ses côtés deux cornières à l'intérieur desquelles peut glisser la cartouche lorsqu'on l'insère dans le réceptacle.

Ce réceptacle est monté sur le bâti BA au moyen de deux charnières $CHAR_1$ et $CHAR_2$ sensiblement horizontales, la charnière $CHAR_1$ se situant vers l'arrière de la mémoire à disques, alors que la charnière $CHAR_2$ se situe à l'avant de celle-ci. Le bâti BA comporte également une porte frontale avant PFA montée sur la même charnière $CHAR_2$ que le réceptacle RECEPT.

Le réceptacle peut occuper deux positions stables, à savoir une position horizontale correspondant à la position de travail de la cartouche CA à l'intérieur de la mémoire à disques (c'est-à-dire la position dans laquelle le moyeu MOY du disque DISC est couplé à des moyens MER d'entraînement en rotation de la mémoire à disques (voir également figure 3)), et une position inclinée par rapport à l'horizontale dite position de repos dans laquelle on peut insérer dans ou retirer la cartouche CA du réceptacle RECEPT.

De même, la porte frontale avant PFA peut occuper deux positions, une position verticale lorsque la cartouche CA est en position de travail et le réceptacle en position horizontale, et d'autre part une position horizontale lorsque la cartouche est en position de repos et le réceptacle en position inclinée.

Lorsque l'on veut retirer la cartouche (figure 2a), on exerce une traction sur la porte frontale avant PFA de manière à faire basculer celle-ci vers l'avant dans le sens de la flèche $F_{AV}$ pour amener la porte PFA de la position verticale à la position horizontale. On peut alors manuellement se saisir de la cartouche CA et la tirer vers soi dans le sens de la flèche $f_E$ (figure 2a) et la retirer complètement du réceptacle.

Inversement, lorsque l'on veut insérer la cartouche on se saisit de celle-ci manuellement, on l'introduit à l'intérieur des deux cornières latérales du réceptacle RECEPT en la poussant vers le fond du bâti BA de la mémoire à disques dans le sens de la flèche $f_i$ (figure 2b).

Lorsque la cartouche CA est complètement insérée dans le réceptacle on peut alors faire basculer la porte frontale avant PFA vers l'arrière dans le sens de la flèche $F_{AR}$ (figure 2b) de manière à faire passer cette porte de sa position horizontale à sa position verticale ce qui fait basculer le réceptacle RECEPT de sa position inclinée à sa position horizontale. Ce dernier exerce alors une force verticale $F_1$ sur la paroi supérieure PSUP de la cartouche et le bâti BA de la mémoire à disques exerce une force verticale $F_2$ sur la paroi PINF inférieure de la cartouche, de sens opposé à $F_1$.

Du fait de l'élasticité des parois PSUP et PINF de la cartouche CA, les collets intérieur $COL_1$ et extérieur $COL_2$ du moyeu PLE sont dégagés de leur portée respective $PORT_1$ et $PORT_2$ ce qui libère le disque. Le moyeu MOY du disque DISC vient se centrer sur un cône CO faisant partie des moyens d'entraînement MER en rotation du disque et est maintenu sur ce dernier grâce à un anneau magnétique annulaire MR solidaire de ces moyens MER (voir figure 3).

Ainsi qu'on peut le constater, l'insertion et la mise en place de la cartouche nécessite deux opérations successives : d'abord la mise en place de la cartouche à l'intérieur du réceptacle, puis la fermeture de la porte frontale avant de manière à abaisser le réceptacle vers sa position horizontale et accoupler le moyeu d'entraînement MOY du disque DISC aux moyens d'entraînement en rotation MER.

La présente invention permet de remédier à ces inconvénients en réalisant l'insertion, la mise en place et l'accouplement du moyeu du disque aux moyens d'entraînement en rotation lors d'une seule et même opération.

La cartouche CART selon l'invention qui est représentée aux figures 4 à 8 permet de remédier à ces inconvénients. Elle comprend un disque DISC dont le moyeu est MOY. La cartouche CART porte une fenêtre F par où peuvent être introduites les têtes magnétiques d'écriture.lecture telles que $TEL_1$ et $TEL_2$ (voir également figure 6), lorsque la cartouche est insérée dans la mémoire à disques à laquelle elle est associée.

La cartouche CART comporte un rideau-fenêtre RF de forme circulaire pouvant coulisser à l'intérieur d'une glissière GLIS. Ce rideau-fenêtre est solidaire d'un ressort de rappel SPG, monté sur l'axe d'entraînement d'une roue à crémaillère CREM (figures 4 et 6).

De préférence, la cartouche CART comprend deux demi-enveloppes $ENV_1$ et $ENV_2$ dont la réunion forme l'enveloppe ENV. Cette enveloppe est de préférence réalisée en un matériau plastique relativement rigide.

Le moyeu MOY de la cartouche CART comprend des roulements $ROUL_1$ et $ROUL_2$ contenus par exemple dans la seule demi-enveloppe $ENV_2$. La cartouche CART comprend également un joint ferrofluidique JOFF disposé entre le moyeu MOY et la paroi interne de l'enveloppe $ENV_2$, une bague BAG étant placée entre le joint et cette paroi ainsi qu'on peut le voir aux figures 5, 6 et 7. Le but de ce joint ferrofluidique est d'éviter que les poussières issues des roulements (provenant par exemple des produits de lubrification de ceux-ci) ne viennent polluer l'atmosphère dans laquelle est situé le disque DISC. Une entretoise ENTO est disposée entre les deux roulements $ROUL_1$ et $ROUL_2$.

Le moyeu MOY du disque comprend un plateau d'entraînement du disque PLE muni d'une rainure RAIN (voir également figure 8), l'enveloppe $ENV_2$ étant également munie d'une rainure $RAIN_2$ qui se trouve dans le prolongement de la rainure RAIN (elle a même largeur et même profondeur) lors de l'insertion de la cartouche dans la mémoire à disques MEMO voir figures 7 et 8 (et bien entendu, lorsque la cartouche est au repos, à l'extérieur de la mémoire à disques).

Le plateau PLE est destiné à être accouplé à un plateau PLENM d'entraînement en rotation du disque appartenant à la mémoire à disques MEMO.

La liaison mécanique entre le plateau d'entraînement PLE et le moyeu MOY est assurée par la vis de fixation VISFD du disque DISC (figures 5 et 7).

La cartouche CART comprend également un ressort SPM fixé sur l'enveloppe $ENV_2$ au moyen de l'ensemble vis-écrou VESPM.

Lorsque la cartouche est au repos, le ressort SPM est plaqué contre le plateau PLE et exerce une force de pression sur ce dernier empêchant ainsi tout mouvement du disque DISC.

Ainsi qu'on peut le voir à la figure 7, lorsque l'on introduit la cartouche CART dans la mémoire à disques MEMO à laquelle elle est associée, mémoire à disques dont le bâti est désigné par BAT, deux tétons de positionnement disposés sur ce bâti, $TET_1$ et $TET_2$ sont disposés à l'intérieur de la rainure $RAIN_2$. Ces tétons de positionnement sont de forme cylindrique et leur diamètre est sensiblement égal à la largeur de la rainure.

Ainsi qu'on peut le voir à la figure 7, le téton $TET_2$ vient plaquer le ressort SPM contre la paroi de l'enveloppe $ENV_2$ de sorte que ce dernier vienne libérer le plateau d'entraînement PLENM rendant ainsi possible la rotation de celui-ci.

De même que les tétons $TET_1$ et $TET_2$ du bâti BAT viennent s'engager dans la rainure $RAIN_2$ de l'enveloppe $ENV_2$, le plateau d'entraînement PLENM du moteur d'entraînement du disque DISC, comporte un téton d'entraînement TETEN qui vient s'engager dans la rainure RAIN du plateau d'entraînement PLE du disque DISC. Ce téton est muni d'un manchon plastique souple pouvant glisser légèrement, tout en étant serré dans la rainure du plateau PLE, afin d'éviter les jeux mécaniques dans l'accouplement entre les deux plateaux et diminuer ainsi les risques de vibration lorsque le disque DISC est en rotation.

Il est clair que lors de l'insertion de la cartouche CART dans la mémoire à disques dont le bâti BAT est représenté à la figure 6, le rideau-fenêtre RF est ouvert au moyen d'une pièce fixe qui appartient à ce bâti, pièce fixe représentée pour simplifier à la figure 6. Elle vient agir sur la crémaillère CREM et donc le ressort SPG qui maintient le rideau-fenêtre RF dans la position indiquée en pointillés à la figure 4. Ainsi qu'il a été dit plus haut, les têtes magnétiques de lecture et d'écriture $TEL_1$ et $TEL_2$ peuvent alors être introduites dans la cartouche CART.

Un autre avantage de la cartouche selon l'invention est la simplicité avec laquelle elle peut être insérée dans la mémoire à disques MEMO, l'insertion et la mise en place de la cartouche CART dans celle-ci et l'accouplement du plateau PLE avec les moyens d'entraînement en rotation MOY s'effectuant en une seule et même opération.

## Revendications

1. Cartouche pour au moins un disque magnétique amovible destinée à être insérée dans un logement d'une mémoire à disque magnétique et constituée d'une enveloppe (ENV) à l'intérieur de laquelle est placé le disque (DISC) et comprenant une paroi inférieure et une paroi supérieure, munie d'une ouverture (F) permettant le passage de têtes de lecture/écriture des informations contenues sur le disque, un dispositif (RF) permettant d'obturer ces ouvertures lorsque la cartouche est au repos, un moyeu (MOY) du disque (DISC) comportant des moyens d'accouplement de celui-ci (PLE) à des moyens d'entraînement en rotation (PLENM), des rainures coopérant avec des moyens de positionnement du logement, caractérisée en ce que les moyens d'accouplement comprennent une première rainure (RAIN), la paroi inférieure de l'enveloppe « (ENV) » comprenant une seconde rainure ($RAIN_2$) et des moyens à ressort (SPM), les moyens à ressort étant en contact avec les moyens d'accouplement (PLE) et les deux rainures étant dans le prolongement l'une de l'autre lors de l'insertion de la cartouche dans le logement, les moyens de positionnement du logement ($TET_1$, $TET_2$) venant se placer à l'intérieur de la seconde rainure ($RAIN_2$), et des seconds moyens de positionnement des moyens d'entraînement en rotation (TETEN) venant s'engager dans la première rainure (RAIN) lors de cette même insertion, au moins l'un des moyens de positionnement ($TET_2$) du logement venant plaquer les moyens à ressort (SPM) contre la paroi inférieure de l'enveloppe (ENV) de manière à ce que ceux-ci. libèrent le moyeu du disque permettant ainsi la rotation de celui-ci.

2. Mémoire à disque magnétique comprenant un logement destiné à recevoir une cartouche selon la revendication 1, les premiers moyens de positionnement du logement comprenant deux tétons ($TET_1$, $TET_2$) disposés à l'intérieur de la seconde rainure lors de l'insertion de la cartouche et les seconds moyens de positionnement des moyens d'entraînement en rotation comprenant un téton d'entraînement (TETEN) disposé à l'intérieur de la première rainure lors de l'insertion de la cartouche.

## Claims

1. Cartridge for at least one removable magnetic disc intended to be inserted into a housing of a magnetic disc memory and formed by a cover (ENV) wherein is positioned the disc (DISC) and having a lower side and an upper side, provided with an opening (F) permitting the passage of heads for reading/writing data contained on the disc, a device (RF) rendering it possible to shut off these openings when the cartridge is out of operation, a hub (MOY) of the disc (DISC) comprising means for coupling the same (PLE) to means for rotational drive (PLENM), grooves cooperating with positioning means of the housing, characterised in that the coupling means comprise a first groove (RAIN), the lower side of the cover (ENV) comprising a second groove ($RAIN_2$) and spring means (SPM), the spring means being in contact with the coupling means (PLE) and the two grooves being positioned one in extension of the other upon insertion of the cartridge into the housing, the positioning means of the housing ($TET_1$, $TET_2$) being positioned within the second groove ($RAIN_2$), and second positioning means of the means for rotational drive (TETEN) being engaged in the first groove (RAIN) during this same insertion, at least one of the positioning means ($TET_2$) of the housing retaining the spring means (SPM) against the lower side of the cover (ENV) in such manner that these release the disc hub thereby permitting the rotation thereof.

2. Magnetic disc memory comprising a housing intended to receive a cartridge according to claim 1, the first positioning means of the housing comprising two stubs ($TET_1$, $TET_2$) situated inside the second groove upon insertion of the cartridge, and the second positioning means of the means for rotational drive comprising a driving stub (TETEN) situated within the first groove during the insertion of the cartridge.

## Patentansprüche

1. Kassette für wenigstens eine entfernbare Magnetplatte, dazu bestimmt, in eine Aufnahme eines Speichers mit Magnetplatte eingeschoben zu werden, und die eine Hülle (ENV) umfaßt, in welche die Platte (DISC) eingelegt wird und die eine untere und eine obere Wand umfaßt sowie eine Öffnung (F) aufweist, welche den Durchgang der Köpfe zum Schreiben/Lesen der auf der Platte enthaltenen Informationen ermöglicht, wobei eine Einrichtung (RF) das Verschließen dieser Öffnungen ermöglicht, wenn die Kassette sich in ihrem Ruhezustand befindet, wobei ferner eine Nabe (MOY) der Platte (DISC) Mittel zum Ankoppeln dieser (PLE) an Drehantriebsmittel (PLENM) enthält und wobei Rillen mit Mitteln zum Aufnahmepositionieren zusammenwirken, dadurch gekennzeichnet, daß die Mittel zum Ankoppeln eine erste Rille (RAIN) umfassen, wobei die untere Wand der Hülle « (ENV) » eine zweite Rille ($RAIN_2$) sowie

Federmittel (SPM) umfaßt, wobei die Federmittel mit den Mitteln zum Ankoppeln (PLE) in Berührung stehen und wobei die beiden Rillen beim Einschieben der Kassette in die Aufnahme in gegenseitiger Verlängerung stehen, wobei die Mittel zum Aufnahmepositionieren (TET$_1$, TET$_2$) im Inneren der zweiten Rille (RAIN$_2$) liegen, wobei zweite Mittel zum Positionieren der Drehantriebsmittel (TETEN) in die erste Rille (RAIN) während desselben Einschiebens eingreifen, und wobei wenigstens eines der Mittel zum Aufnahmepositionieren (TET$_2$) die Federmittel (SPM) gegen die untere Wand der Hülle (ENV) anlegt, so daß diese die Plattennabe freigeben und so deren Drehung ermöglichen.

2. Magnetplattenspeicher mit einer Aufnahme, die dazu bestimmt ist, eine Kassette nach Anspruch 1 zu empfangen, wobei die ersten Mittel zum Aufnahmepositionieren zwei Zapfen (TET$_1$, TET$_2$) umfassen, die beim Einschieben der Kassette im Inneren der zweiten Rille angeordnet sind, und wobei die zweiten Mittel zum Positionieren der Drehantriebsmittel einen Antriebszapfen (TETEN) umfassen, der beim. Einschieben der Kassette im Inneren der ersten Rille angeordnet ist.

FIG.1

FIG. 2a

FIG. 2b

FIG.3

FIG. 4

SPG
GLIS

RD

DISC

MOY

F

RF

CART

0 160 992

## FIG. 5

ENV₁  MOY  JOFF  AXᵣ  ROUL₁  BAG ESP

ENV — DISC — F

RAIN₂  ENV₂  ENTO  VISFD  ROUL₂  RAIN  SPM  ENV₂  VESPM

PLE

## FIG. 7

ENV₁  MOY  JOFF  AXᵣ  ROUL₁  BAG MOY

DISC — F

TET₁  ENV₂  TETEN  ROUL₂  TET₂

MEMO  BAT  PLENM  SPM  VESPM

0 160 992

FIG. 6

FIG. 8